# EUROPEAN PATENT SPECIFICATION

(11) **EP 3 643 444 B1**
(45) Date of publication and mention of the grant of the patent: **03.11.2021**
(21) Application number: 19196295.0
(22) Date of filing: 09.09.2019
(51) Int. Cl.: B23K 26/18, B23K 26/354, C22B 9/22, C23C 24/10, C22F 1/00, C22F 1/02, C22F 1/04, B23K 103/10

(54) **SURFACE LASER REMELTING TREATMENT METHOD FOR ALUMINUM ALLOY OF VEHICLE WHEEL HUB**
LASEROBERFLÄCHENUMSCHMELZVERFAHREN FÜR ALUMINIUMLEGIERUNG VON FAHRZEUGRADNABEN
TRAITEMENT LASER DE REFUSION DE SURFACES D'ALLIAGE D'ALUMINIUM D'UN MOYEU DE ROUE DE VEHICULE

(30) Priority: 25.10.2018 CN 201811253422
(43) Date of publication of application: 29.04.2020
(73) Proprietor: Citic Dicastal Co., Ltd., 066011 Quinhuangdao, Heibei (CN)
(72) Inventor: E, Junqiang, Qinhuangdao, Heibei 066011 (CN); Zhu, Zhihua, Qinhuangdao, Heibei 066011 (CN); Gao, Shiyou, Qinhuangdao, Heibei 066011 (CN); Zhang, Shengchao, Qinhuangdao, Heibei 066011 (CN); Huang, Xiaoguang, Qinhuangdao, Heibei 066011 (CN); Zhang, Donghui, Qinhuangdao, Heibei 066011 (CN)
(74) Representative: Gong, Jinping

(56) References cited:
- CN-A- 101 012 561
- JP-B2- 3 397 904
- WOLDETINSAY G. JIRU ET AL: "Investigation of microstructure and microhardness in laser surface alloyed aluminium with TiO 2 and SiC powders", MATERIALS TODAY: PROCEEDINGS, vol. 4, no. 2, 1 January 2017 (2017-01-01) , pages 717-724, XP055642316, ISSN: 2214-7853, DOI: 10.1016/j.matpr.2017.01.077
- JANEZ SUSNIK ET AL: "Influence of Laser Surface Remelting on Al-Si Alloy Properties", STROJNISKI VESTNIK - JOURNAL OF MECHANICAL ENGINEERING, vol. 58, no. 10, 15 October 2012 (2012-10-15), pages 614-620, XP055642419, SI ISSN: 0039-2480, DOI: 10.5545/sv-jme.2012.696
- R. STURM ET AL: "Influence of the alloying elements in Al-Si alloys on the laser remelting process", LASERS IN ENGINEERING, vol. 22, no. 1-2, 1 January 2012 (2012-01-01), pages 47-61, XP055642441, US ISSN: 0898-1507

## Description

### TECHNICAL FIELD

The invention relates to the field of metal surface treatment, in particular to a surface laser remelting treatment method for aluminum alloy.

### BACKGROUND

In the existing design, in order to protect and decorate the surface of aluminum alloy materials, it is generally treated by coating, vacuum coating, electroplating, etc., but the edge of the treated aluminum alloy materials is prone to produce corrosion defects such as filiform corrosion and foaming. Therefore, in order to remove the corrosion defects of these edge portions, the treatment of rounding by wind-driven polishing, scraping or increasing the thickness of the coating or plating is often used to solve the corrosion defects and make the rounded corners more rounded. However, the edge portion of the aluminum alloy treated by the treatment method is not high in hardness, and is poor in wear resistance and corrosion resistance, and the process of the treatment method is complicated, difficult to operate, and high in cost.

JP 3397904 B2 relates to a transparent substance which absorbs a laser wavelength.

WOLDETINSAY G. JIRU ET AL: "Investigation of microstructure and microhardness in laser surface alloyed aluminium with TiO 2 and SiC powders", MATERIALS TODAY: PROCEEDINGS, vol. 4, no. 2, 1 January 2017 (2017-01-01), pages 717-724, XP055642316, ISSN: 2214-7853, DOI: 10.1016/j.matpr.2017.01.077, discloses a surface laser melting process for aluminum alloys.

JANEZ SUSNIK ET AL: "Influence of Laser Surface Remelting on Al-Si Alloy Properties", STROJNISKI VESTNIK - JOURNAL OF MECHANICAL ENGINEERING, vol. 58, no. 10, 15 October 2012 (2012-10-15), pages 614-620, XP055642419, SI ISSN: 0039-2480, DOI: 10.5545/sv-jme.2012.696, discloses a surface laser melting process for aluminum alloys (Al-Si alloy).

R. STURM ET AL: "Influence of the alloying elements in Al-Si alloys on the laser remelting process", LASERS IN ENGINEERING, vol. 22, no. 1-2, 1 January 2012 (2012-01-01), pages 47-61, XP055642441, US ISSN: 0898-1507, disclose a surface laser melting process for aluminum alloys.

CN 101 012 561 A also disclose a surface laser melting process for aluminum alloys.

### SUMMARY

In view of this, the object of the present invention is to provide a surface laser remelting treatment method for aluminum alloy, as specified in any one of claims 1-7, which can solve the problem that the conventional treatment of aluminum alloy surface is easy to produce corrosion defects such as filiform corrosion and foaming in the treated edge, and has high hardness, wear resistance and corrosion resistance.

In order to achieve the above object, the technical solution of the present invention is achieved according to the appended claims.

A surface laser remelting treatment method for aluminum alloy according to the present invention comprises: cleaning the surface to be treated of the aluminum alloy; spraying isolating light absorbing agent on the surface to be treated which has been cleaned; and using a laser to scan the surface to be treated which has been sprayed with the isolating light absorbing agent to perform remelting. It can be seen that in the surface laser remelting treatment method for aluminum alloy of the present invention, the surface to be treated of the aluminum alloy is irradiated by laser, so that the surface material is rapidly melted, and then is rapidly condensed, thereby forming a layer of homogeneous structure on the surface of the remelted aluminum alloy, which can remove burrs, change the rounded corners to make the rounded corners more rounded, and achieve a complete paint film coverage, and the remelted structure has higher hardness, wear resistance and corrosion resistance. Moreover, no alloying elements are added when the surface of aluminum alloy is melted, and the molten layer is thin and the thermal acting zone is small, so that the treatment process is simplified and easy to operate, and is more suitable for mass production, which greatly reduces the processing cost.

Other advantageous effects of the present invention will be further illustrated in the detailed description in conjunction with the specific technical solutions.

### BRIEF DESCRIPTION OF THE DRAWINGS

Fig. 1 is a schematic diagram of the laser remelting processing method according to an embodiment of the present invention;
Fig. 2 is a schematic diagram of the laser remelting processing method according to Embodiment 1 of the present invention;
Fig. 3 is a schematic structural view of the aluminum alloy material after laser remelting treatment according to Embodiment 1 of the present invention;
Fig. 4 is a microstructural view of the laser remelting zone and the nearby substrate of the hub in Embodiment 1 of the present invention;
Fig. 5 is a view showing the aluminum alloy material after laser remelting and CASS test treatment in Embodiment 1 of the present invention;
Fig. 6 is a partial enlarged view of the surface of the laser remelting zone of Fig. 5;
Fig. 7 is a partial enlarged view of the surface of the non-laser remelting zone of Fig. 5;
Fig. 8 is a topographical view of the non-laser remelting zone in Embodiment 1 of the present invention;
Fig. 9 is a topographical view of the laser remelting zone in Embodiment 1 of the present invention;
Fig. 10 is a microscopic view showing the corrosion state and the depth of the non-laser remelting zone in Embodiment 1 of the present invention;
Fig. 11 is a microscopic view showing the corrosion state and the depth of a laser remelting zone in Embodiment 1 of the present invention;
Fig. 12 is a microscopic topographical view of the surface of the sample block at the edge of the hub in Embodiment 1 of the present invention;
Fig. 13 is the view showing the surface profile detection result of the laser remelting zone of the Zone 1 in Fig. 12.

### DETAILED DESCRIPTION OF THE INVENTION

Embodiments of the present invention provide a surface laser remelting treatment method for aluminum alloy of a vehicle wheel hub which comprises: cleaning the surface to be treated of the aluminum alloy; spraying isolating light absorbing agent on the surface to be treated which has been cleaned; and using a laser to scan the surface to be treated which has been sprayed with the isolating light absorbing agent to perform remelting.

In the surface laser remelting treatment method for aluminum alloy of the present invention, the surface to be treated of the aluminum alloy is irradiated by laser, so that the surface material is rapidly melted, and then is rapidly condensed, thereby forming a layer of homogeneous structure on the surface of the remelted aluminum alloy, which can remove burrs, change the rounded corners to make the rounded corners more rounded, and achieve a complete paint film coverage, and the remelted structure has higher hardness, wear resistance and corrosion resistance. Moreover, no alloying elements are added when the surface of aluminum alloy is melted, and the molten layer is thin and the thermal acting zone is small, so that the treatment process is simplified and easy to operate, and is more suitable for mass production, which greatly reduces the processing cost.

In the embodiment of the present invention, the aluminum alloy is mainly cast aluminum alloy A356.2, deformation aluminum alloy 6061 or deformation aluminum alloy 6068 series, etc., but those skilled in the art can understand that the aluminum alloy can also be other types of aluminum alloy.

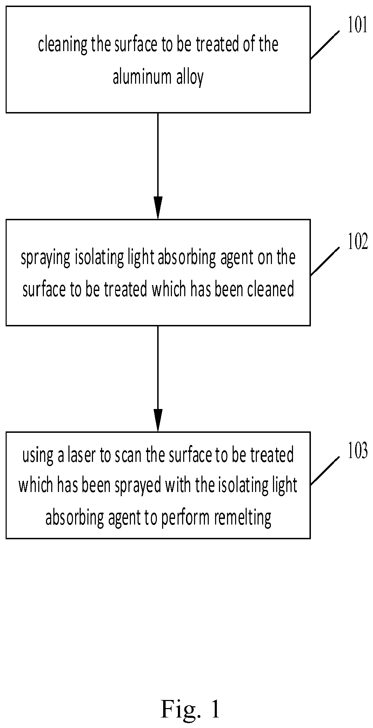

Specifically, as shown in FIG. 1, the surface laser remelting treatment method for aluminum alloy comprises:
Step 101: cleaning the surface to be treated of the aluminum alloy;
Step 102: spraying isolating light absorbing agent on the surface to be treated which has been cleaned;
Step 103: using a laser to scan the surface to be treated which has been sprayed with the isolating light absorbing agent to perform remelting.

According to the invention, the step of using a laser to scan the surface to be treated which has been sprayed with the isolating light absorbing agent to perform remelting comprises:
remelting the surface to be treated by a laser with a power of 3-8 kW, a rectangular spot having a side length of 1.5-2 cm, and a scanning rate of 7-30 mm/s. In this way, the laser remelting process has better effect and higher efficiency. Specifically, the laser in the embodiment of the present invention is emitted by a fiber laser or a semiconductor laser, but it should be understood that other lasers are also possible.

Preferably, the overlap ratio between the two remelting zones can also be set to 10% to 20% during laser remelting. Setting the overlap ratio can effectively reduce the occurrence of pore defects at the edge of the remelting zone, and make the entire remelting zone have stronger hardness and better corrosion resistance. However, it should be understood that it is also possible to set other proportions of overlap ratios.

In one embodiment, the step of using a laser to scan the surface to be treated which has been sprayed with the isolating light absorbing agent to perform remelting further comprises:
remelting the surface to be treated under the protection of inert gas which is any one of nitrogen, argon and helium, wherein the inert gas has an oxygen content of less than 200 ppm.

When the laser scans the surface to be treated, the inert gas can effectively isolate the contact of the laser remelted molten pool with air, preventing the aluminum alloy from chemically reacting with substances such as oxygen in the air during rapid melting and rapid condensation, so that the material obtained after laser remelting has more stable structure, firmer hardness and better corrosion resistance.

In one embodiment, before using a laser to scan the surface to be treated which has been sprayed with the isolating light absorbing agent to perform remelting, the method further comprises:
heating the surface temperature of the surface to be treated to 50-80 degrees Celsius.

Preheating the surface to be treated in advance not only accelerates the melting of the aluminum alloy of the surface to be treated, but also avoids defects such as cracks after condensation, which is a preferred mode.

According to the invention, the step of cleaning the surface to be treated of the aluminum alloy comprises:
polishing the surface to be treated to remove the aluminum oxide layer on the surface.

In one embodiment, the step of polishing the surface to be treated to remove the aluminum oxide layer of the surface comprises:
polishing the surface to be treated by a pneumatic polisher to polish away a thickness 0.5-1.0 mm.

Since an aluminum oxide layer is formed on the metal surface of the product during the production process of the aluminum alloy product, and the heat resistance temperature of the aluminum oxide layer is high, so that the melting rate of the aluminum alloy of the surface to be treated is lowered, thereby polishing away the aluminum oxide layer of the surface to be treated can effectively improve the processing effect of laser remelting. The embodiment of the present invention is polished by a pneumatic polisher, because the pneumatic polisher has high grinding efficiency, small volume and convenient use, but the present invention is not limited thereto, and it is also possible to use for example an electric angle grinder or a magnetic grinder to polish.

In one embodiment, before polishing the surface to be treated to remove the aluminum oxide layer of the surface, the method further comprises:
washing the surface to be treated with water to remove impurities and dirt on the surface to be treated.

In one embodiment, after polishing the surface to be treated to remove the aluminum oxide layer of the surface, the method further comprises:
drying and degassing the surface to be treated which has been removed the aluminum oxide layer of the surface; and degreasing the surface to be treated which has been dried and degassed.

Drying, degassing and degreasing the surface to be treated can prevent chemical reaction of the aluminum alloy with water vapor and grease on the surface during laser remelting to cause defects, thereby affecting the hardness and corrosion resistance of the remelted mechanism, which is a preferred way.

In one embodiment, the step of degreasing may use a dilute acid solution such as dilute hydrochloric acid or dilute acetic acid, or a dilute alkali solution such as sodium hydroxide, but the present invention is not limited thereto.

In one embodiment, the step of drying and degassing the surface to be treated which has been removed the aluminum oxide layer of the surface comprises:
placing the aluminum alloy whose surface to be treated has been removed the aluminum oxide layer of the surface into an electric blast drying oven for drying and degassing; wherein the electric blast drying oven is set to have a temperature of 150-200 degrees Celsius, a relatively humidity of 5-10% and a duration of 2-5 minutes.

According to the invention, step of spraying isolating light absorbing agent on the surface to be treated which has been cleaned comprises:
spraying one or more of phosphate, titanium oxide, zirconium oxide, graphite and carbon black on the surface to be treated which has been cleaned with a thickness of 0.15-0.25 mm. In this way, the laser light can be better guided into the metallographic structure of the surface to be treated to maximize the energy of the laser; the isolating light absorbing agent is an optical medium material.

The present invention will be further described in detail below in conjunction with the drawings and specific embodiments. It is understood that the specific embodiments described herein are merely illustrative of the invention and are not intended to limit the invention.

### Embodiment 1

In the present embodiment, the edge portion of the aluminum alloy vehicle wheel hub (hereinafter referred to as the hub) is subjected to laser remelting treatment, specifically the spoke edge and the window edge of the aluminum alloy vehicle hub, that is, the surface to be treated is the spoke edge and the window edge of the aluminum alloy vehicle hub. The hub in the present embodiment is made of cast aluminum alloy A356.2.

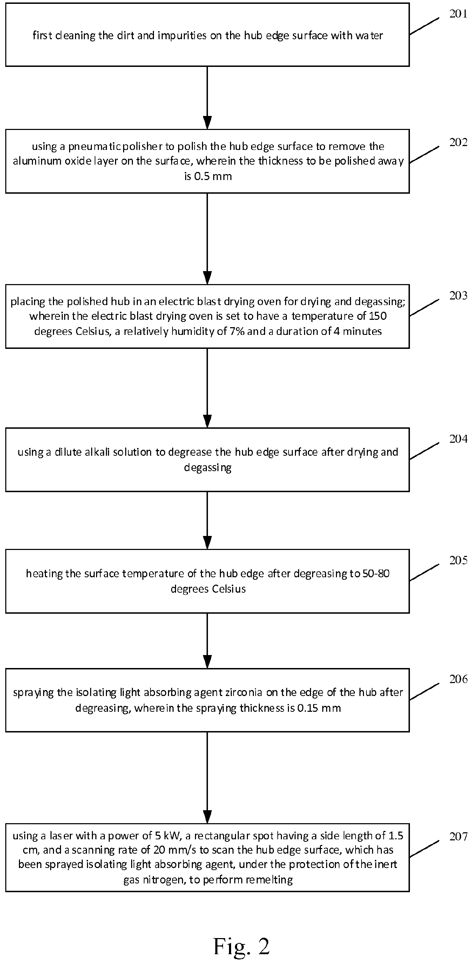

As shown in FIG. 2, the method for performing laser remelting treatment on the hub edge of the present embodiment comprises the following steps:
Step 201: first cleaning the dirt and impurities on the hub edge surface with water;
Step 202: using a pneumatic polisher to polish the hub edge surface to remove the aluminum oxide layer on the surface, wherein the thickness to be polished away is 0.5 mm;
Step 203: placing the polished hub in an electric blast drying oven for drying and degassing; wherein the electric blast drying oven is set to have a temperature of 150 degrees Celsius, a relatively humidity of 7% and a duration of 4 minutes;
Step 204: using a dilute alkali solution to degrease the hub edge surface after drying and degassing;
Step 205: heating the surface temperature of the hub edge after degreasing to 50-80 degrees Celsius;
Step 206: spraying the isolating light absorbing agent zirconia on the edge of the hub after degreasing, wherein the spraying thickness is 0.15 mm;
Step 207: using a laser with a power of 5 kW, a rectangular spot having a side length of 1.5 cm, and a scanning rate of 20 mm/s to scan the hub edge surface, which has been sprayed isolating light absorbing agent, under the protection of the inert gas nitrogen, to perform remelting. The overlap ratio during laser remelting is set to 10% to 15%. The inert gas nitrogen has an oxygen content of less than 200 ppm.

A copper salt accelerated acetate spray (CASS) corrosion test is performed on the surface of the hub after laser remelting.

The test conditions of the CASS corrosion test are as follows: the concentration of sodium chloride in the test solution used is 50±5 g/L, the concentration of copper dichloride (CuCl2.2H2O) is 0.26±0.02 g/L, the pH value of the test solution is 3.1-3.3, the temperature of the test chamber is set to 50±2 °C, the spray amount is set to 1.0-2.0 ml/h, and the test time is set to 240 hours.

Those skilled in the art should understand the test process and steps of the CASS corrosion test, therefore the present embodiment will repeat them here.

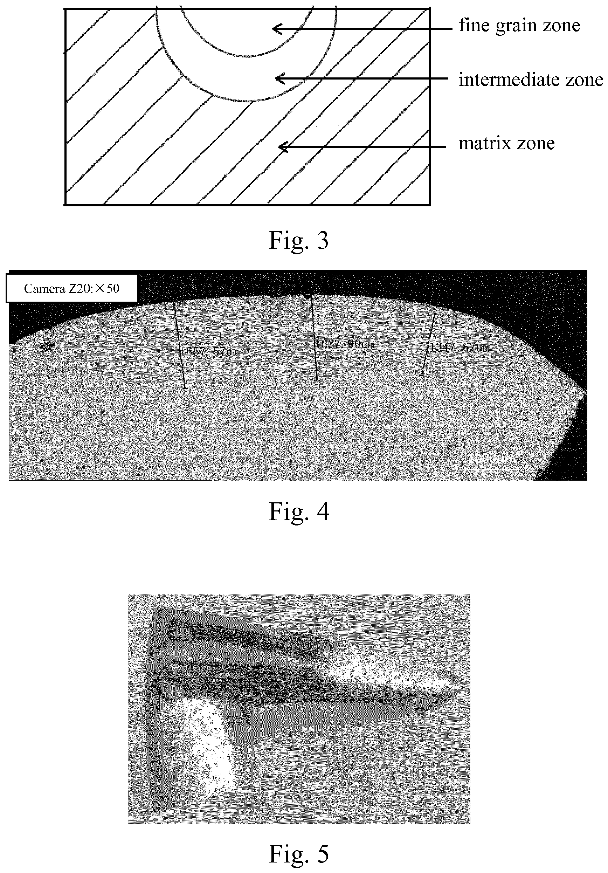

The results after the test are detailed as follows:
As shown in Figures 3 and 4, an approximately semi-circular laser remelting zone is formed on the cross section of the hub edge, and the outer surface of the laser remelting zone has a circular arc shape. The grain size of the laser remelting zone is significantly increased from the outside to the inside (that is, from the upper part to the lower part of the laser remelting zone shown in Fig. 3). According to the size of the grain, the laser remelting zone of the hub can be divided into three zones, i.e., a fine grain zone located on the surface layer of the laser remelting zone, a matrix zone which is not remelted, and an intermediate zone between the fine grain zone and the matrix zone. It can be seen from the drawing that the maximum depth of the laser remelting zone is about 1657 µm, and the thickness of the transition zone between the fine grain zone and the matrix zone is about 130 µm. The laser remelting zone is composed of α-Al dendrites and Al-Si eutectics. Compared to the matrix zone, the dendrites in the laser remelting zone are finer. It can also be seen from the drawing that some pore defects are generated in the laser remelting zone, and the pores are mainly distributed along the surface layer and the transition zone of the laser remelting zone.

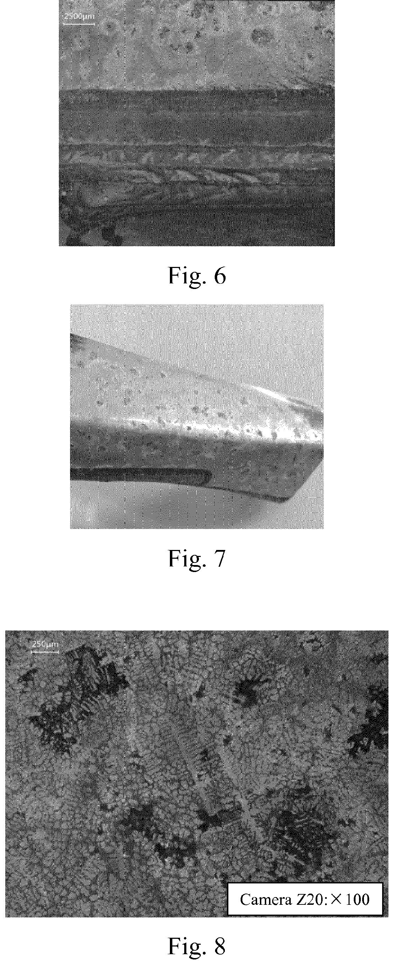

As shown in Fig. 5 to Fig. 9, after the CASS test, there is a significant difference in the non-laser remelting zone and the laser remelting zone on the surface of the hub. The non-laser remelting zone has severe corrosion and the corrosion points are almost continuous. However, only a few corrosion points appear in the laser remelting zone, and all the corrosion points occur at the location of the surface pores.

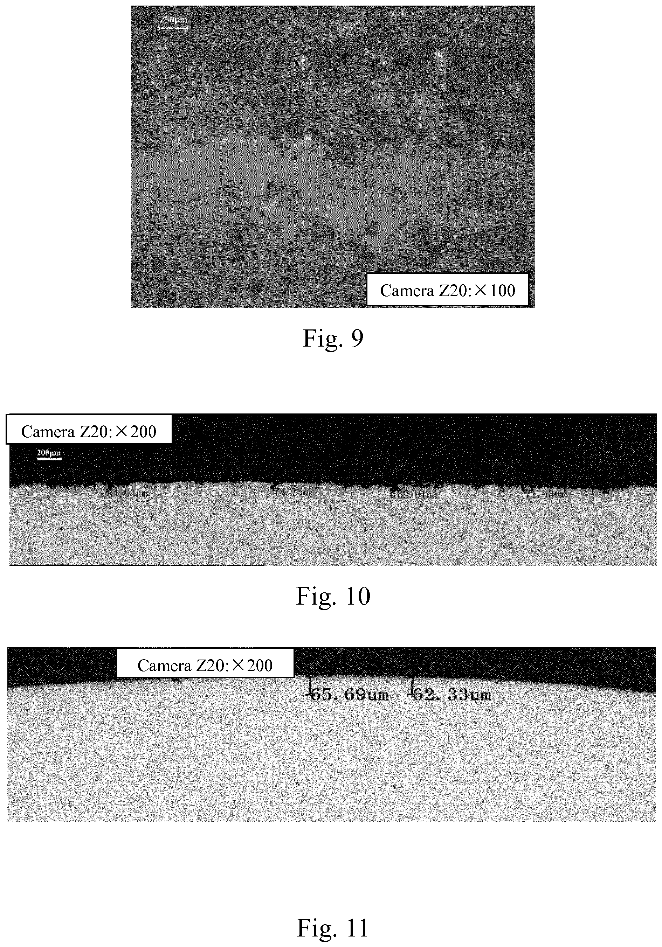

At the same time, under the 200X microscopic observation to the sample after the test, it is found that, as shown in Fig. 10, the non-laser remelting zone is severely corroded, the corrosions points are almost continuous, and the corrosion depth is about 110 µm. As shown in Fig. 11, the laser remelting zone is also corroded, but only a few corrosion points appear, and all the corrosion points occur at the position of the surface pores, and the corrosion depth is about 60 µm.

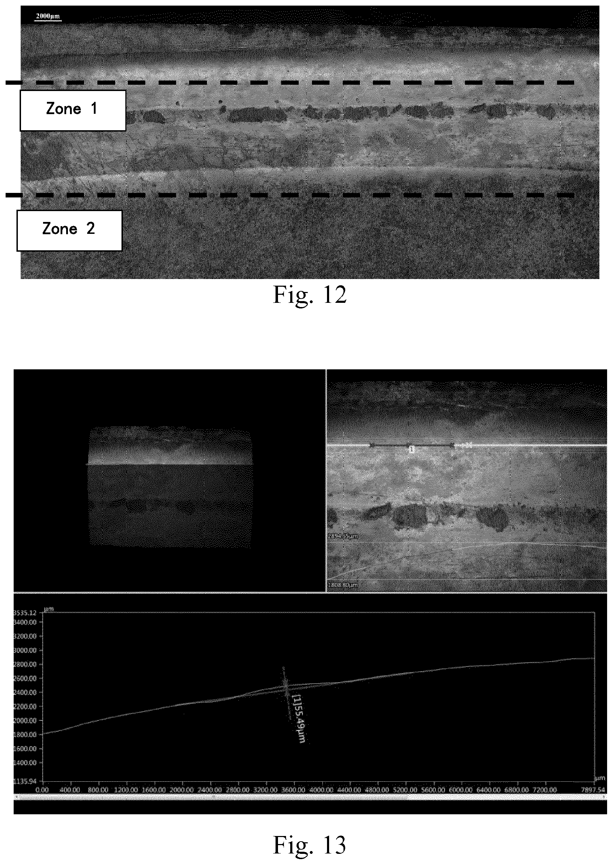

As shown in Fig. 12, the zone 1 is the laser remelting zone of the hub surface, and the zone 2 is the laser remelting zone of the hub surface. It can be clearly seen from the drawing that there are no obvious corrosion points in zone 1, but there are pore defects on the surface, and almost the entire surface of zone 2 is covered with corrosion points.

From the above observations, it can be concluded that impurities and gases can be eliminated during the laser remelting process, even if gas defects are generated, the number thereof is small, and the gas defects are distributed in the surface and transition zone of the laser remelting zone, while the crystals of the structure obtained by quench recrystallization are finer, which in turn makes the hardness of the structure after laser remelting higher. At the same time, the test results also show that both the laser remelting zone and the non-laser remelting zone have corrosion, but the corrosion points of the non-laser remelting zone are almost continuous, and only a few corrosion points appear in the laser remelting zone, and all the corrosion points occur at the position of the surface pores, thus it can be seen that the hub surface treated by the laser remelting treatment method for aluminum alloy surface of the embodiment of the present invention has stronger corrosion resistance.

As shown in Fig. 13, the surface of the laser remelting zone of the hub of Embodiment 1 is very smooth, and no large projections or depressions are observed, and the projection height of the maximum convex position is only 55.49 µm. It can be seen that the laser remelting treatment of the embodiment of the present invention can remove burrs, change the rounded corners to make the rounded corners more rounded, achieve a complete paint film coverage and enhance the anti-corrosion effect.

### Embodiment 2

The present embodiment is the same as Embodiment 1 except that the following content is different from Embodiment 1:
1) The hub is made of deformation aluminum alloy 6061; the deformation aluminum alloy 6061 has higher strength and toughness than the cast aluminum alloy A356.2, but the corrosion resistance thereof is slightly poor;
2) The thickness polished away of the surface of the hub edge is 0.7 mm; due to the slightly poor corrosion resistance, the thickness polished away is greater, the clean effect of the surface to be treated is better;
3) The settings of the electric blast drying oven are as follows: the temperature is 170 degrees Celsius, the relative humidity is 5%, and the duration is 4 minutes; because of the more polishing, the higher drying temperature and lower humidity are required, so that the drying is more thorough;
4) Titanium oxide is selected as the isolating light absorbing agent, and the thickness of the spray coating is 0.2 mm; a laser with a power of 7 kW, a rectangular spot having a side length of 1.5 cm, and a scanning rate of 25 mm/s is used. In this way, the energy of the laser can be maximized and the laser remelting effect can be improved.

### Embodiment 3

The present embodiment is the same as Embodiment 1 except that the following content is different from Embodiment 1:
1) The hub used is made of deformation aluminum alloy 6068; the deformation aluminum alloy 6068 has higher strength and toughness than cast aluminum alloy A356.2, but the corrosion resistance thereof is slightly poor;
2) The thickness polished away of the surface of the hub edge is 0.9 mm; due to the slightly poor corrosion resistance, the thickness polished away is greater, the clean effect of the surface to be treated is better;
3) The settings of the electric blast drying oven are as follows: the temperature is 200 degrees Celsius, the relative humidity is 8%, and the duration is 5 minutes; because of the more polishing, the higher drying temperature and lower humidity are required, so that the drying is more thorough;
4) Carbon black is selected as the isolating light absorbing agent, and the thickness of the spray coating is 0.18 mm; a laser with a power of 6 kW, a rectangular spot having a side length of 1.5 cm, and a scanning rate of 25 mm/s is used. In this way, by increasing the laser power and simultaneously adjusting the isolating light absorbing agent, the laser remelting effect is improved, so that the corrosion resistance is better.

The CASS corrosion tests were carried out on the hub surface after laser remelting of Embodiment 2 and Embodiment 3, respectively. The test results are similar to those of Embodiment 1. The specific test results are shown in the following table:

| | corrosion state | corrosion depth |
|---|---|---|
| non-laser remelting zone | large area continuous corrosion | 80-110 µm |
| laser remelting zone | small amount of corrosion points on the surface | 70-110 µm |

It can be seen from the test data that the zone after laser remelting treatment has fewer surface corrosion points and shallower corrosion depth than the surface of non-laser remelting treatment, and the surface of the aluminum alloy after laser remelting is more resistant to corrosion.

In summary, through using the laser remelting treatment method of the present invention to perform laser remelting treatment on the edge surface of the aluminum alloy, the edge material of the aluminum alloy is recrystallized by rapid melting and condensation, so that the microstructure obtained by recrystallization has relatively high hardness, wear resistance and corrosion resistance, and the laser remelting can remove the edge burrs of aluminum alloy, change the rounded corners to make the rounded corners more round, and achieve a complete paint film coverage, which is convenient for post-processing of aluminum alloy products.

In addition, after the laser remelting of the edge surface of the aluminum alloy, it is also required to be grinded, and be coated after polishing, or be coated after machining treatment, in order to beautify the appearance of the aluminum alloy product, and make the anticorrosive effect better.

Compared with other aluminum alloy edge surface treatment methods, the surface laser remelting treatment method for aluminum alloy of the present invention has the following advantages:
1. Compared with surface surfacing, laser remelting requires less protection for the molten pool and has faster speed because it does not need to convert the welding material into a high-temperature liquid form and then migrates it into the arc molten pool.
2. Since laser remelting is more environmentally friendly than electroplating or electroless plating, it has minimal environmental pollution, and because it does not require anti-pollution treatment, it is conducive to environmental protection and can reduce costs.
3. Compared with thermal spraying, plasma spraying and other spraying technologies, laser remelting greatly reduces noise pollution during processing. The prepared coating has low porosity and little influence on the matrix, and hardly affects the structure of the matrix.
4. Compared with chemical heat treatment technologies such as surface nitriding, carburizing and boronizing, laser remelting does not need to heat the matrix to a high temperature and keep it warm for a long time, therefore the production process is simpler and faster.
5. Compared with laser cladding technology, laser remelting does not need to add other metal powders on the surface of the material. The remelted layer and the matrix material will form a natural metallurgical bond.
6. Because both the laser heating speed and the cooling speed are extremely fast during the laser remelting process, the molten layer is relatively thin, the thermal action zone is small, and the workpiece deformation is small, therefore it is suitable for a wide range of complex types of components.
7. The optimization effect on the surface properties of the material is remarkable, the coating having special structural properties can be prepared, and the microstructure obtained by recrystallization has relatively high hardness, wear resistance and corrosion resistance.

The above is only a specific description of the preferred embodiments of the present invention, while the present invention is defined by the scope of the appended claims.

## Claims

1. A surface laser remelting treatment method for aluminum alloy of a vehicle wheel hub, **characterized in that** the method comprises:
cleaning the surface to be treated of the aluminum alloy, wherein the step of cleaning the surface to be treated of the aluminum alloy comprises: polishing the surface to be treated to remove the aluminum oxide layer on the surface;
spraying isolating light absorbing agent on the surface to be treated which has been cleaned, wherein the step of spraying isolating light absorbing agent on the surface to be treated which has been cleaned comprises: spraying one or more of phosphate, titanium oxide, zirconium oxide, graphite and carbon black on the surface to be treated which has been cleaned with a thickness of 0.15-0.25 mm; and
using a laser to scan the surface to be treated which has been sprayed with the isolating light absorbing agent to perform remelting, wherein the step of using a laser to scan the surface to be treated which has been sprayed with the isolating light absorbing agent to perform remelting comprises: remelting the surface to be treated by a laser with a power of 3-8 kW, a rectangular spot having a side length of 1.5-2 cm, and a scanning rate of 7-30 mm/s.

2. The laser remelting treatment method according to claim 1, **characterized in that** the step of using a laser to scan the surface to be treated which has been sprayed with the isolating light absorbing agent to perform remelting further comprises:
remelting the surface to be treated under the protection of inert gas which is any one of nitrogen, argon and helium, wherein the inert gas has an oxygen content of less than 200 ppm.

3. The laser remelting treatment method according to claim 1, **characterized in that** before using a laser to scan the surface to be treated which has been sprayed with the isolating light absorbing agent to perform remelting, the method further comprises:
heating the surface temperature of the surface to be treated to 50-80 degrees Celsius.

4. The laser remelting treatment method according to claim 1, **characterized in that** before polishing the surface to be treated to remove the aluminum oxide layer of the surface, the method further comprises:
washing the surface to be treated with water.

5. The laser remelting treatment method according to claim 1, **characterized in that** after polishing the surface to be treated to remove the aluminum oxide layer of the surface, the method further comprises:
drying and degassing the surface to be treated which has been removed the aluminum oxide layer of the surface; and
degreasing the surface to be treated which has been dried and degassed.

6. The laser remelting treatment method according to claim 1, **characterized in that** the step of polishing the surface to be treated to remove the aluminum oxide layer of the surface comprises:
polishing the surface to be treated by a pneumatic polisher to polish away a thickness 0.5-1.0 mm.

7. The laser remelting treatment method according to claim 5 is **characterized in that** the step of drying and degassing the surface to be treated which has been removed the aluminum oxide layer of the surface comprises:
placing the aluminum alloy whose surface to be treated has removed the aluminum oxide layer of the surface into an electric blast drying oven for drying and degassing; wherein the electric blast drying oven is set to have a temperature of 150-200 degrees Celsius, a relatively humidity of 5-10% and a duration of 2-5 minutes.

## Patentansprüche

1. Verfahren zur Oberflächenumschmelzbehandlung mit Laser für eine Aluminiumlegierung einer Fahrzeugradnabe, **dadurch gekennzeichnet, dass** das Verfahren umfasst:
Reinigen der zu behandelnden Oberfläche von der Aluminiumlegierung, wobei der Schritt des Reinigens der zu behandelnden Oberfläche von der Aluminiumlegierung umfasst: Polieren der zu behandelnden Oberfläche, um die Aluminiumoxidschicht auf der Oberfläche zu entfernen;
Aufsprühen von isolierendem lichtabsorbierendem Mittel auf die gereinigte zu behandelnde Oberfläche, wobei der Schritt des Aufsprühens von isolierendem lichtabsorbierendem Mittel auf die zu behandelnde zu reinigende Oberfläche umfasst: Aufsprühen eines oder mehrerer von Phosphat, Titanoxid, Zirkoniumoxid, Graphit und Ruß auf die gereinigte zu behandelnde Oberfläche mit einer Dicke von 0,15 bis 0,25 mm; und
Verwenden eines Lasers zum Abtasten der zu behandelnden Oberfläche, die mit dem isolierenden Lichtabsorptionsmittel besprüht wurde, um das Umschmelzen durchzuführen, wobei der Schritt des Verwendens eines Lasers zum Abtasten der zu behandelnden Oberfläche, die mit dem isolierenden Lichtabsorptionsmittel besprüht wurde, um das Umschmelzen durchzuführen, umfasst: Umschmelzen der zu behandelnden Oberfläche mit einem Laser mit einer Leistung von 3-8 kW, einem rechteckigen Fleck mit einer Seitenlänge von 1,5-2 cm und einer Abtastrate von 7-30 mm/s.

2. Verfahren zur Oberflächenumschmelzbehandlung mit Laser für eine Aluminiumlegierung einer Fahrzeugradnabe nach Anspruch 1, **dadurch gekennzeichnet, dass** der Schritt des Verwendens eines Lasers zum Abtasten der zu behandelnden Oberfläche, die mit dem isolierenden Lichtabsorptionsmittel besprüht wurde, um das Umschmelzen durchzuführen, ferner umfasst:
Umschmelzen der zu behandelnden Oberfläche unter dem Schutz eines Inertgases, das eines von Stickstoff, Argon oder Helium ist, wobei das Inertgas einen Sauerstoffgehalt von weniger als 200 ppm aufweist.

3. Verfahren zur Oberflächenumschmelzbehandlung mit Laser für eine Aluminiumlegierung einer Fahrzeugradnabe nach Anspruch 1, **dadurch gekennzeichnet, dass** vor der Verwendung eines Lasers zum Abtasten der zu behandelnden Oberfläche, die mit dem isolierenden Lichtabsorptionsmittel besprüht wurde, um ein Umschmelzen durchzuführen, das Verfahren ferner umfasst:
Erwärmung der Oberflächentemperatur der zu behandelnden Oberfläche auf 50-80 Grad Celsius.

4. Verfahren zur Oberflächenumschmelzbehandlung mit Laser für eine Aluminiumlegierung einer Fahrzeugradnabe nach Anspruch 1, **dadurch gekennzeichnet, dass** vor dem Polieren der zu behandelnden Oberfläche, um die Aluminiumoxidschicht der Oberfläche zu entfernen, das Verfahren ferner umfasst:
Waschen der zu behandelnden Oberfläche mit Wasser.

5. Verfahren zur Oberflächenumschmelzbehandlung mit Laser für eine Aluminiumlegierung einer Fahrzeugradnabe nach Anspruch 1, **dadurch gekennzeichnet, dass** nach dem Polieren der zu behandelnden Oberfläche, um die Aluminiumoxidschicht der Oberfläche zu entfernen, umfasst das Verfahren ferner:
Trocknen und Entgasen der zu behandelnden Oberfläche, von der die Aluminiumoxidschicht der Oberfläche entfernt wurde; und
Entfetten der zu behandelnden Oberfläche, die getrocknet und entgast wurde.

6. Verfahren zur Oberflächenumschmelzbehandlung mit Laser für eine Aluminiumlegierung einer Fahrzeugradnabe nach Anspruch 1, **dadurch gekennzeichnet, dass** der Schritt des Polierens der zu behandelnden Oberfläche zum Entfernen der Aluminiumoxidschicht der Oberfläche umfasst:
Polieren der zu behandelnden Oberfläche durch einen pneumatischen Polierer, um eine Dicke von 0,5-1,0 mm wegzupolieren.

7. Verfahren zur Oberflächenumschmelzbehandlung mit Laser für eine Aluminiumlegierung einer Fahrzeugradnabe nach Anspruch 1, **dadurch gekennzeichnet, dass** der Schritt des Trocknens und Entgasens der zu behandelnden Oberfläche, von der die Aluminiumoxidschicht der Oberfläche entfernt wurde, umfasst:
Einbringen der Aluminiumlegierung, deren zu behandelnde Oberfläche die Aluminiumoxidschicht der Oberfläche entfernt ist, in einen elektrischen Blastrockenofen zum Trocknen und Entgasen; wobei der elektrische Blastrocknungsofen auf eine Temperatur von 150-200 Grad Celsius, eine relative Feuchtigkeit von 5-10% und eine Dauer von 2-5 Minuten eingestellt ist.

## Revendications

1. Procédé de traitement de refusion superficielle par laser pour un alliage d'aluminium d'un moyeu de roue de véhicule, **caractérisé en ce que** le procédé comprend :
le nettoyage de la surface à traiter de l'alliage d'aluminium, dans lequel l'étape de nettoyage de la surface à traiter de l'alliage d'aluminium comprend : le polissage de la surface à traiter pour enlever la couche d'oxyde d'aluminium sur la surface ;
la pulvérisation d'un agent isolant d'absorption de la lumière sur la surface à traiter qui a été nettoyée, dans lequel l'étape de pulvérisation d'un agent isolant d'absorption de la lumière sur la surface à traiter qui a été nettoyée comprend : la pulvérisation d'un ou plusieurs de phosphate, oxyde de titane, oxyde de zirconium, graphite et noir de carbone sur la surface à traiter qui a été nettoyée avec une épaisseur de 0,15-0,25 mm; et
l'utilisation d'un laser pour balayer la surface à traiter qui a été pulvérisée avec l'agent isolant d'absorption de la lumière pour effectuer une refonte, dans laquelle l'étape d'utilisation d'un laser pour balayer la surface à traiter qui a été pulvérisée avec l'agent d'absorption de lumière isolant pour effectuer une refusion comprend : la refusion de la surface à traiter par un laser d'une puissance de 3-8 kW, un point rectangulaire ayant une longueur latérale de 1,5-2 cm, et une vitesse de balayage de 7-30 mm/s.

2. Procédé de traitement de refusion par laser selon la revendication 1, **caractérisé en ce que** l'étape d'utilisation d'un laser pour balayer la surface à traiter qui a été pulvérisée avec l'agent isolant d'absorption de la lumière pour effectuer la refusion comprend en outre :
la refusion de la surface à traiter sous la protection d'un gaz inerte qui est l'un quelconque de l'azote, de l'argon et de l'hélium, dans laquelle le gaz inerte a une teneur en oxygène inférieure à 200 ppm.

3. Procédé de traitement de refusion par laser selon la revendication 1, **caractérisé en ce qu'**avant l'utilisation d'un laser pour balayer la surface à traiter qui a été pulvérisée avec l'agent isolant d'absorption de la lumière pour effectuer la refusion, le procédé comprend en outre :
le chauffage de la température de surface de la surface à traiter à 50-80 degrés Celsius.

4. Procédé de traitement de refusion par laser selon la revendication 1, **caractérisé en ce qu'**avant le polissage de la surface à traiter pour enlever la couche d'oxyde d'aluminium de la surface, le procédé comprend en outre :
le lavage à l'eau de la surface à traiter.

5. Procédé de traitement de refusion par laser selon la revendication 1, **caractérisé en ce qu'**après le polissage de la surface à traiter pour enlever la couche d'oxyde d'aluminium de la surface, le procédé comprend en outre :
le séchage et le dégazage de la surface à traiter dont la couche d'oxyde d'aluminium de la surface a été enlevée ; et
le dégraissage de la surface à traiter qui a été séchée et dégazée.

6. Procédé de traitement de refusion par laser selon la revendication 1, **caractérisé en ce que** l'étape de polissage de la surface à traiter pour enlever la couche d'oxyde d'aluminium de la surface comprend :
le polissage de la surface à traiter par une polisseuse pneumatique pour enlever par polissage d'une épaisseur de 0,5 à 1,0 mm.

7. Procédé de traitement de refusion par laser selon la revendication 5, **caractérisé en ce que** l' étape de séchage et de dégazage de la surface à traiter dont la couche d'oxyde d'aluminium de la surface a été enlevée comprend :
le placement de l'alliage d'aluminium dont la surface à traiter a enlevé la couche d'oxyde d'aluminium dans un four de séchage par soufflage électrique pour le séchage et le dégazage ; dans lequel le four de séchage par soufflage électrique est réglé pour avoir une température de 150-200 degrés Celsius, une humidité relative de 5-10%, et une durée de 2-5 minutes.
